# FASCICULE DE BREVET EUROPEEN

(11) **EP 4 095 399 B1**
(45) Date de publication et mention de la délivrance du brevet: **10.04.2024**
(21) Numéro de dépôt: 22175492.2
(22) Date de dépôt: 25.05.2022
(51) Int. Cl.: F16B 5/06, F16B 3/06

(54) **ENSEMBLE DE LIAISON DE TYPE DOUBLE EXCENTRIQUE COMPRENANT UNE BAGUE EN MATÉRIAU DÉFORMABLE, POUR UNE LIAISON ENTRE DEUX STRUCTURES D'UN AÉRONEF, ET AÉRONEF COMPRENANT UN TEL ENSEMBLE**
VERBINDUNGSANORDNUNG VOM TYP DOPPELEXZENTER MIT EINEM RING AUS VERFORMBAREM MATERIAL FÜR EINE VERBINDUNG ZWISCHEN ZWEI STRUKTUREN EINES LUFTFAHRZEUGS UND LUFTFAHRZEUG MIT EINER SOLCHEN ANORDNUNG
DOUBLE ECCENTRIC CONNECTION ASSEMBLY COMPRISING A RING MADE FROM DEFORMABLE MATERIAL, FOR CONNECTING TWO STRUCTURES OF AN AIRCRAFT, AND AIRCRAFT COMPRISING SUCH AN ASSEMBLY

(30) Priorité: 28.05.2021 FR 2105594
(43) Date de publication de la demande: 30.11.2022
(73) Titulaire: Airbus Operations (S.A.S.), 31060 Toulouse Cedex 9 (FR)
(72) Inventeur: GOUPIL, Frédéric, 31060 TOULOUSE (FR); FAUCHILLE, Vincent, 31300 TOULOUSE (FR); POTAUFEUX, Laurent, 31300 TOULOUSE (FR)
(74) Mandataire: Cabinet Le Guen Maillet

(56) Documents cités:
- WO-A2-02/38902
- WO-A2-2005/075780

## Description

### DOMAINE TECHNIQUE

La présente invention concerne l'assemblage de structures, notamment d'aéronef. L'invention concerne plus particulièrement l'assemblage de deux structures au moyen d'un ensemble de liaison utilisant deux bagues excentriques dont l'une, extérieure, est enfilée sur l'autre, intérieure. L'invention concerne également un aéronef comprenant un tel ensemble de liaison entre deux structures.

### ETAT DE LA TECHNIQUE ANTERIEURE

Il est connu d'assembler deux structures mécaniques en utilisant un assemblage de deux bagues excentriques dont l'une, extérieure, logée et maintenue dans une ouverture traversante de l'une des structures, est enfilée sur l'autre, intérieure ; l'alésage de la bague intérieure est alors prévu pour une fixation à l'autre des deux structures. Un tel assemblage permet une double rotation lors de l'assemblage d'une liaison mécanique, c'est-à-dire une rotation de la bague excentrique intérieure dans la bague excentrique extérieure, et une rotation de la bague excentrique extérieure dans l'ouverture traversante de la structure dans laquelle elle est logée. Cette double rotation permet de compenser un mauvais alignement entre l'axe longitudinal de l'alésage de la bague intérieure et l'axe longitudinal d'un alésage dans lequel doit être inséré un élément de fixation, par exemple une vis d'un boulon, utilisé pour assembler les deux structures. En effet, lors de la réalisation d'une fixation boulonnée entre deux pièces, les tolérances des pièces et les opérations d'assemblage conduisent souvent à un désalignement entre les deux trous de passage par lesquels le boulon doit être inséré. La compensation d'un mauvais alignement axial, au moyen d'un tel assemblage de deux bagues excentriques, peut avantageusement se faire selon deux directions. Cependant, un tel assemblage conduit à la création d'un entrefer radial qui limite conséquemment la possibilité de transférer des charges radiales, qui entraîne un risque de rotation des bagues excentriques, et génère de l'usure, des chocs et des bruits.

La situation peut donc être améliorée,

Le document WO 02/38902 A2 décrit un élément d'assemblage à insérer dans un alésage.

### EXPOSE DE L'INVENTION

La présente invention vise notamment à améliorer le transfert de charges radiales à travers un ensemble d'assemblage à deux bagues excentriques (l'une enfilée sur l'autre) qui relie deux structures au moyen d'un élément de fixation tel que, par exemple un boulon.

A cet effet, l'invention a pour objet un ensemble de liaison entre deux structures, l'ensemble de liaison comprenant :
- un insert de forme générale cylindrique ou tronconique présentant un alésage, agencé pour opérer une liaison avec l'une desdites deux structures grâce à un élément de fixation comportant une tige insérée dans l'alésage, l'axe longitudinal de l'alésage étant différent de l'axe longitudinal de l'insert de sorte que l'insert présente une forme générale de bague excentrique,
l'ensemble de liaison comprenant en outre :
- une bague excentrique, en matériau déformable, de forme générale cylindrique ou tronconique, agencée pour être logée dans une ouverture traversante de l'autre structure parmi les deux structures, l'ouverture traversante de la structure présentant une forme complémentaire à la surface de révolution extérieure de la bague excentrique, la bague excentrique comprenant en outre une ouverture traversante de forme complémentaire à la surface de révolution extérieure de l'insert et agencée pour y loger l'insert, l'axe longitudinal de l'ouverture traversante de la bague excentrique étant confondu ou sensiblement confondu avec l'axe longitudinal de l'insert, et la bague excentrique étant enfilée sur l'insert, de sorte que l'assemblage de l'insert et de la bague excentrique constitue un enfilement dit « double excentrique » dans lequel la bague excentrique est enfilée sur l' insert, lui-même de la forme d'une bague excentrique, et,
- deux éléments de compression s' étendant radialement par rapport à l'axe longitudinal de l'ouverture traversante, présentant chacun un trou de passage configuré pour le passage de l'élément de fixation et étant d'une part solidaire de l'autre structure ou présentant une surface d'appui sur une surface de l'autre structure, perpendiculaire à l'axe longitudinal de l'ouverture traversante, et présentant d'autre part une surface d'appui sur au moins une surface de l'insert, perpendiculaire à l'axe longitudinal de l'ouverture traversante, la bague excentrique étant dimensionnée pour présenter une forme comprimée quand les deux éléments de compression sont maintenus en position d'appui sur les surfaces d'appui.

L'ensemble de liaison selon l'invention peut également comporter les caractéristiques suivantes, considérées seules ou en combinaison :
- L'insert est fait d'un matériau déformable, et l'insert et ladite bague excentrique s'étendent de part et d'autre de l'ouverture traversante de la structure, au-delà d'un plan comprenant lesdites surfaces d'appui.
- L'alésage de l'insert et l'ouverture traversante de la bague excentrique comprennent chacun un tube de métal, les deux tubes de métal étant de longueur identique, inférieure à la longueur de l'insert et à la longueur de ladite bague excentrique.
- L'insert est en métal et présente une forme générale tronconique, et dans lequel ladite bague excentrique est en matériau déformable et l'ouverture traversante de ladite bague excentrique présente une forme complémentaire à la surface de révolution extérieure de l'insert.
- L'un, premier, des deux éléments de compression est une partie de l'une des deux structures, dont le trou de passage présente un diamètre inférieur au diamètre de l'ouverture traversante de la structure et formant une butée pour l'insert et la bague excentrique, et l'autre des deux éléments de compression est une rondelle dont le diamètre extérieur est supérieur au diamètre de l'ouverture traversante de la structure et dont le diamètre intérieur est inférieur au diamètre de l'insert et supérieur au diamètre de l'alésage de l'insert.
- Le matériau déformable est un élastomère.

L'invention a également pour objet une partie d'aéronef comprenant une première structure, une deuxième structure, et un ensemble de liaison tel que précédemment décrit.

Enfin, l'invention a pour objet un aéronef comprenant une partie d'aéronef telle que précitée ou un ensemble de liaison tel que précédemment décrit.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre sur une même figure une vue schématique présentant un plan de coupe A-A ainsi qu'une coupe selon le plan A-A d'un ensemble de liaison entre deux structures utilisant une bague excentrique enfilée sur une autre bague excentrique et un boulon (avant assemblage), selon l'art antérieur;
[Fig. 2] illustre schématiquement, sur une même figure, un ensemble de liaison entre deux structures utilisant une bague excentrique enfilée sur une autre bague excentrique et un boulon, selon un premier mode de réalisation, avant et après assemblage;
[Fig. 3] illustre schématiquement, sur une même figure, l'ensemble de liaison déjà représenté sur la Fig.2, selon une variante, avant et après assemblage;
[Fig. 4] illustre schématiquement, sur une même figure, une variante du mode de réalisation déjà représenté sur les Fig.2 et Fig. 3, avant et après assemblage;
[Fig. 5] illustre schématiquement un deuxième mode de réalisation ; et,
[Fig. 6] représente un aéronef comprenant un ensemble de liaison selon un mode de réalisation.

### EXPOSE DETAILLE DE MODES DE REALISATION

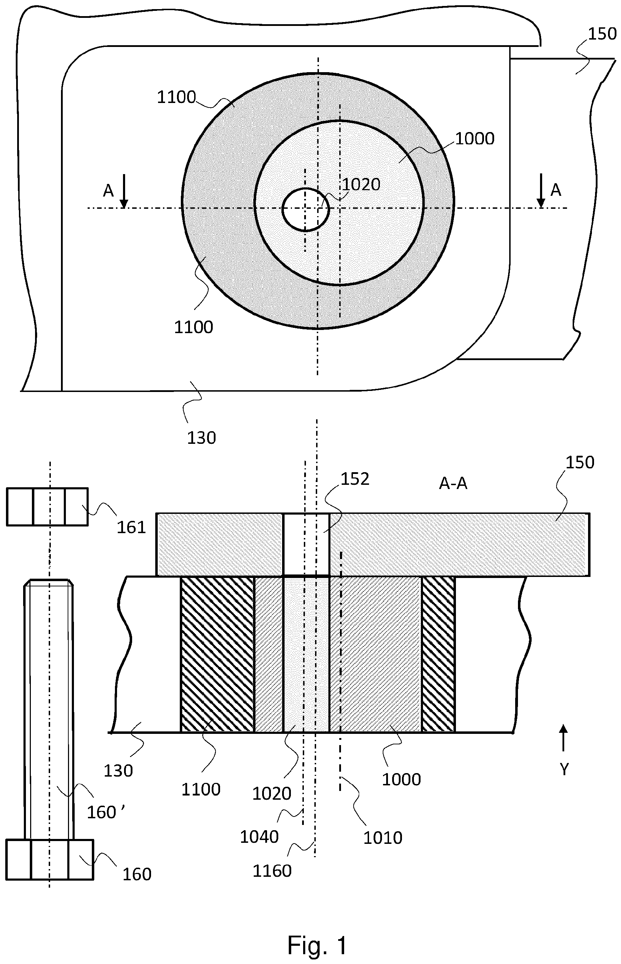

La **Fig. 1** représente schématiquement un ensemble de liaison entre une première structure 150 et une deuxième structure 130, selon l'état de la technique. Selon l'exemple décrit, les structures 130 et 150 sont des structures d'un même aéronef. La partie supérieure de la Fig. 1 illustre un rapprochement des structures 130 et 150 avant assemblage et la partie inférieure de la Fig. 1 illustre une vue de dessus des structures 130 et 150, en coupe, selon un plan de coupe A-A, ainsi qu'un élément de fixation 160, 161 composé d'une vis 160 et d'un écrou 161, prévu pour opérer une liaison mécanique boulonnée entre les structures 130 et 150. Sur la Fig. 1, les structures 130 et 150 ne sont pas intégralement représentées, et seules les parties des structures 130 et 150, respectivement voisines d'un trou de passage prévu pour opérer la liaison mécanique boulonnée entre les structures, et agencé dans chacune des structures, sont représentées. Une représentation du reste de chacune des structures 130 et 150 n'est pas utile à la compréhension de l'ensemble de liaison décrit.

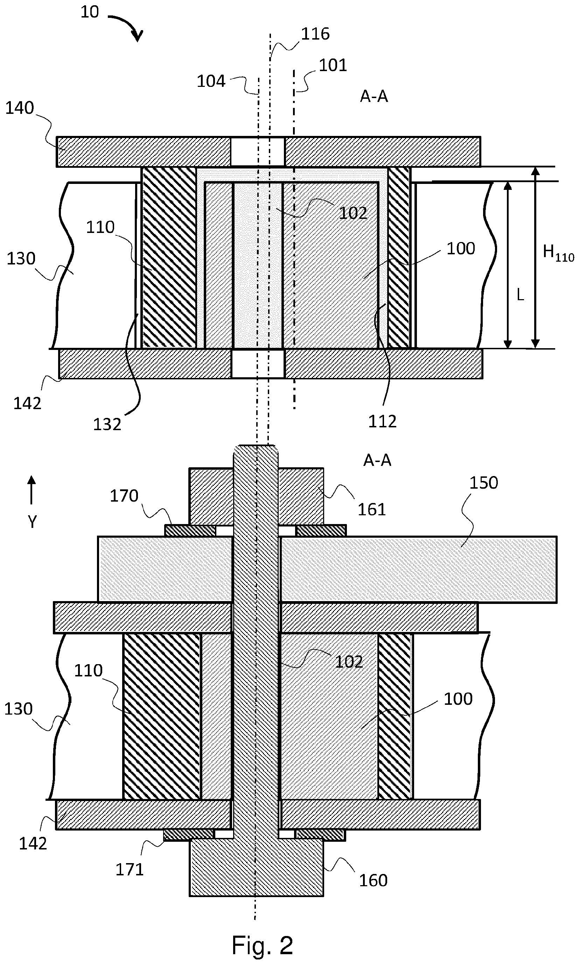

La structure d'aéronef 130 comprend une ouverture traversante, dans laquelle est logée une bague excentrique métallique 1100 présentant un axe longitudinal (ou axe de rotation) 1160. La bague excentrique 1100 comprend elle aussi une ouverture traversante dans laquelle est logée une deuxième bague excentrique métallique 1000, présentant un axe longitudinal (ou axe de rotation) 1010 et comprenant un alésage 1020 prévu pour l'insertion d'une tige, par exemple la tige d'une vis d'un boulon. L'alésage 1020 présente un axe longitudinal 1040. L'ensemble de la bague excentrique 1100, dite « bague excentrique extérieure » et de la bague excentrique 1000, dite « bague excentrique intérieure », constitue une structure parfois appelée « double excentrique » permettant avantageusement de déplacer l'alésage 1020 de la bague excentrique intérieure (et donc une vis insérée dans cet alésage) en regard d'un alésage 152, agencé dans la structure 150, les alésages 1020 et 152 étant prévus pour la liaison des structures 130 et 150 grâce à l'élément de fixation 160, 161, ici de type boulon. Il est à noter que le plan de coupe A-A utilisé pour la représentation en partie basse de la Fig. 1 comprend un diamètre de la bague excentrique extérieure et un diamètre de la bague excentrique intérieure. Le positionnement de ce plan de coupe sera encore utilisé plus loin dans la description de modes de réalisation, à partir de la Fig. 2.

Grâce à l'ensemble de liaison représenté, la rotation de la bague excentrique intérieure 1000 dans la bague excentrique extérieure 1100 d'une part, et la rotation de la bague excentrique 1100 dans l'ouverture traversante de la structure 130, d'autre part, permettent un positionnement relatif de l'axe longitudinal 1040 de l'alésage 1020 et de l'axe longitudinal de l'alésage 152, selon deux directions. Lorsque les alésages 1020 et 152 sont alignés suite à la rotation de chacune des deux bagues excentriques 1000 et 1100, et que les structures 130 et 150 sont positionnées dans des positions prédéfinies, l'assemblage des structures 130 et 150 est finalisé par l'insertion de l'élément de fixation 160, ici une vis, dans les alésages 1020 et 152, alignés, et sur laquelle est ensuite vissé l'écrou 161 du boulon composé des éléments 160 et 161. Dans la configuration assemblée, une fois la liaison boulonnée réalisée, une tige 160' de la vis 160 occupe les alésages 1020 et 152.

Si un désalignement peut être supprimé ou compensé de la sorte, un tel ensemble de liaison présente des inconvénients, notamment du fait de la présence de jeux mécaniques, en termes de transfert de charges radiales, de vibrations, d'usure et de bruit. En effet, l'assemblage et le réglage d'un tel ensemble requièrent qu'il existe un jeu radial entre la bague excentrique intérieure et la bague excentrique extérieure, ainsi qu'un jeu radial entre la bague excentrique extérieure et l'ouverture traversante de la structure qui l'accueille.

Dans la suite de la présente description, une bague excentrique intérieure d'une structure de type «double excentrique » est également appelée « insert » pour améliorer la lisibilité et la compréhension du montage comprenant deux bagues excentriques.

La **Fig. 2** est un schéma de principe illustrant un ensemble de liaison mécanique 10 comprenant une structure de type « double excentrique », selon un premier mode de réalisation. Les éléments sont représentés ici dans une coupe selon un plan A-A similaire à celui déjà défini sur la Fig. 1, à savoir un plan de coupe comprenant ici un diamètre de la bague excentrique extérieure 110 et un diamètre de l'insert 100. La partie supérieure de la Fig. 2 illustre l'ensemble de liaison mécanique 10 avant assemblage (sans boulon), et la partie inférieure de la Fig. 2 représente le même ensemble de liaison mécanique 10 après assemblage (avec boulon). L'ensemble de liaison 10 représenté est utilisé pour opérer une liaison mécanique boulonnée entre les structures d'aéronef 130 et 150 au moyen d'un boulon 160, 161 comprenant une vis 160 et un écrou 161. L'ensemble de liaison 10 comprend un insert 100 présentant un alésage 102. L'axe longitudinal 104 de l'alésage 102 n'est pas confondu avec l'axe longitudinal (ou axe de rotation) 101 de l'insert 100, si bien que l'insert 100 présente une forme générale de bague excentrique. L'insert 100 est inséré dans une ouverture traversante 112 d'une bague excentrique 110 de sorte que l'ensemble de la bague excentrique 110 et de l'insert 100 prend la forme d'une structure double excentrique dans laquelle la bague excentrique 110 est la bague excentrique extérieure et dans laquelle l'insert 100 est la bague excentrique intérieure. La bague excentrique 110 présente un axe longitudinal (ou axe de rotation) 116.

Avantageusement, l'insert 100 est en métal et la bague excentrique 110 est astucieusement réalisée dans un matériau déformable quasi incompressible et présente une hauteur H₁₁₀ supérieure à la longueur L de l'ouverture traversante 132 de la structure 130 dans laquelle elle est logée, et l'insert 100 présente une hauteur égale ou sensiblement égale à la longueur de l'ouverture traversante 132 de la structure 130. La hauteur de l'insert 100 ou de la bague excentrique 110 est définie dans la présente description comme l'est usuellement la hauteur d'un cylindre, c'est-à-dire sa dimension selon un axe longitudinal, les sections terminales étant perpendiculaires à l'axe longitudinal du cylindre. En d'autres termes, la bague excentrique 110, s'étend au-delà d'au moins l'une des limites de l'ouverture traversante 132, et donc au-delà d'un plan comprenant des surfaces d'appui (ou épaulements) de la structure 130, en périphérie de l'ouverture traversante 132. La partie supérieure de la Fig.2 illustre un tel assemblage où l'insert 100 est inséré dans la bague excentrique 110, et où la bague excentrique 110 est insérée dans l'ouverture traversante 132 de la structure 130. Astucieusement, les tolérances de dimensions de diamètre de l'insert 100 et de la bague excentrique 110 sont prédéfinies de sorte que des jeux mécaniques existent et facilitent l'insertion de l'insert 100 dans la bague excentrique 110 ainsi que l'insertion de la bague excentrique 110 dans l'ouverture de passage 132 de la structure 130. En outre, les tolérances ainsi prédéfinies et les jeux mécaniques en présence permettent d'opérer une rotation aisée de l'insert 100 dans la bague excentrique 110 et de la bague excentrique 110 dans l'ouverture traversante 132 de la structure 130. Un tel assemblage facilite sensiblement les opérations de montage de la liaison mécanique entre la structure 130 et la structure 150. L'intérêt principal d'un tel ensemble de liaison, dans lequel la bague excentrique 110 est réalisée dans un matériau déformable, quasi incompressible, est que, lorsque des éléments de compression 140 et 142 sont assemblés de part et d'autre de la bague excentrique 110 et de l'insert 100, puis rapprochés l'un de l'autre en appui sur les épaulements de la bague excentrique 110 et de l'insert 100, le matériau déformable de la bague excentrique, qui opère alors comme un ressort, fait de matériau quasi incompressible, se déforme et vient occuper les interstices en présence, de sorte à les combler.

La partie inférieure de la Fig. 2 illustre les éléments déjà décrits sur la partie supérieure de cette même Fig. 2, où un boulon, composé d'une vis 160 et d'un écrou 161, maintient des éléments de compression 140, 142, rapprochés l'un de l'autre selon une direction Y (représentée par une flèche sur la Fig. 2) en appui à la fois sur des surfaces d'appui de la structure 130, et sur les épaulements respectifs de la bague excentrique 110 et de l'insert 100. Dans l'exemple représenté, une partie de la structure 150 présentant un alésage, est maintenue prisonnière entre une rondelle 170 contre laquelle est vissé l'écrou 161 sur la tige filetée de la vis 160 et l'élément de compression 140. De l'autre côté de la structure 130 (ou plus précisément d'une partie de la structure 130), une rondelle 171 est utilisée pour offrir une surface d'appui à la tête de la vis 160. Ainsi selon l'exemple décrit, les éléments de compression 140 et 142 sont des rondelles de grande dimension et les rondelles d'appui 170 et 171, sont des rondelles de dimensions inférieures à celles des rondelles 140 et 142, ces dernières opérant une fonction de compression du matériau déformable de la bague excentrique 110. Bien évidemment, il est possible de s'affranchir de l'utilisation des rondelles 170 et 171, pour peu que les diamètres de la tête de vis de la vis 160, de l'écrou 161, de la bague excentrique 110 et de l'insert 100 soient agencés de sorte que la liaison boulonnée permette la compression de la bague excentrique 110 faite de matériau déformable, entre les éléments de compression 140 et 142, étant ici et par exemple, des rondelles de grandes dimensions. Il peut être observé, sur Fig. 2 que tout ou partie des interstices présents et visibles entre la surface de l'ouverture traversante 132 et la surface de révolution extérieure de la bague 110 d'une part, ainsi que les interstices présents et visibles entre la surface de révolution extérieure de l'insert 100 et la surface de l'ouverture traversante 112 de la bague excentrique 110 sont comblés après serrage de la liaison boulonnée et donc après la compression des éléments de compression 140 et 142 sur les surfaces des épaulements de la bague excentrique 110, qui est déformée pour combler les jeux mécaniques.

Avantageusement, cela permet de limiter conséquemment les mouvements relatifs, même faibles, qui pourraient exister entre la bague excentrique 110, opérant comme une bague excentrique extérieure d'une structure double excentrique, et l'insert 100, opérant quant à lui comme une bague excentrique intérieure de la même structure double excentrique. Le calage ainsi réalisé réduit ou élimine les vibrations, les chocs, l'usure et le bruit et permet d'opérer un transfert optimisé de charges radiales entre les structures 130 et 150, ce qui est particulièrement avantageux, par exemple dans le cas de structures d'un aéronef. Avantageusement le matériau déformable de la bague excentrique 110 est un élastomère, l'élastomère présentant des caractéristiques d'hyper élasticité et de quasi-incompressibilité idéales pour le type de déformation recherchée, notamment en regard des jeux mécaniques existant dans un ensemble de liaison comprenant une structure double excentrique.

Selon un mode de réalisation, l'insert 100 est de forme globalement cylindrique et la bague excentrique 110 est de forme globalement cylindrique.

Selon une variante, l'insert 100 est de forme globalement tronconique, et l'ouverture traversante 112 de la bague excentrique 110 présente une forme tronconique au moins partiellement complémentaire à la forme tronconique d'une surface de révolution de l'insert 100.

Selon une autre variante la surface de révolution de la bague extérieure 110 est de forme tronconique et la surface intérieure de l'ouverture traversante 132 de la structure 130 est de forme tronconique complémentaire à la surface de révolution extérieure de la bague excentrique 110.

Plus généralement, les formes des ouvertures traversantes 112, 132 et des surfaces extérieures de révolution décrites peuvent être cylindriques ou tronconiques, pour peu qu'elles permettent des rotations de la bague excentrique 110 et de l'insert 100, l'un par rapport à l'autre ainsi que par rapport aux structures 130 et 150, pour opérer un alignement des alésages recevant l'élément de fixation 160, 161. En outre, les jeux mécaniques existants doivent être suffisamment importants pour faciliter l'assemblage de la liaison entre les structures 130 et 150 et suffisamment réduits pour que la déformation du matériau déformable de la bague excentrique puisse compenser les jeux mécaniques qui existent avant compression, grâce aux éléments de compression 140 et 142 rapprochés l'un de l'autre par l'effet du serrage de l'écrou 161 sur la vis 160, ou en d'autres termes, par l'effet du serrage de la liaison boulonnée.

Selon une variante du mode de réalisation décrit en relation avec la Fig. 2, l'insert 100 n'est pas en métal et est lui aussi réalisé en matériau déformable quasi incompressible et s'étend également au-delà des limites de l'ouverture traversante 132 de la structure 130, de sorte qu'il subisse lui aussi une déformation de nature à combler les interstices prédéfinis par des dimensions des pièces avant déformation du matériau déformable, les déformations de la bague extérieure 110 et de l'insert 100 étant toutes deux induites par le rapprochement des éléments de compression 140 et 142, par exemple de type rondelle, sous l'effet du serrage de l'écrou 161 sur la vis 160.

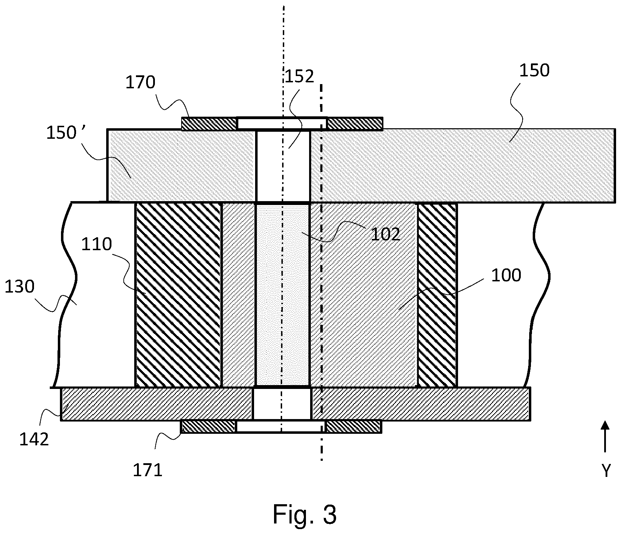

La **Fig. 3** représente une variante de mode de réalisation selon laquelle la forme de la structure 150 est telle qu'une partie 150' de la structure 150, située en périphérie du trou de passage 152 de la structure 150 utile à la liaison boulonnée des structures 130 et 150, opère comme un élément de compression en s'apparentant fonctionnellement à une rondelle de grande dimension. Avantageusement, il est alors possible de s'affranchir par exemple de l'élément de compression 140, de type rondelle. La déformation du matériau déformable quasi incompressible se faisant alors sous l'effet de la force exercée par une partie de la structure 150, d'une part, et par l'élément de compression 142, d'autre part.

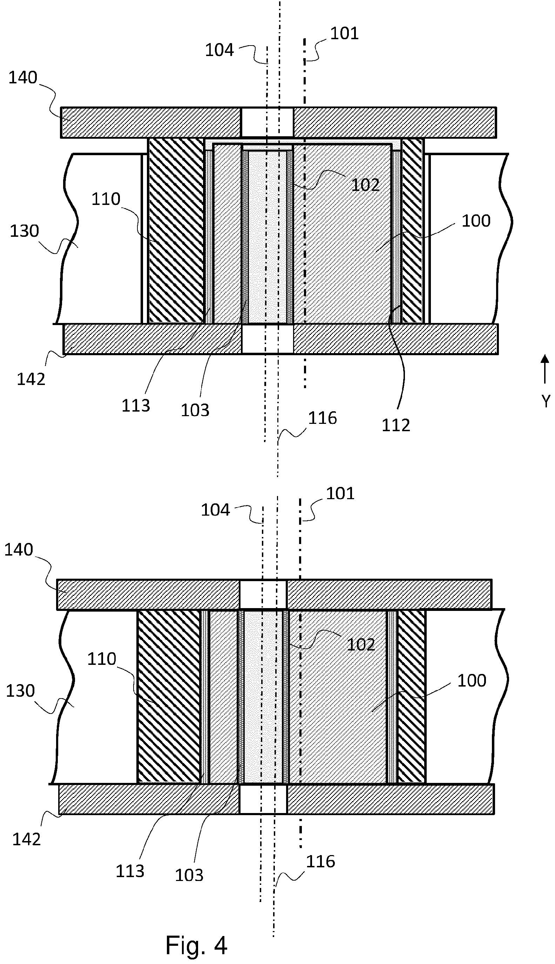

La **Fig. 4** représente une autre variante de mode de réalisation, selon laquelle, l'insert 100 et la bague excentrique 110 sont réalisés en matériau déformable quasi incompressible et comprennent chacun une couche métallique interne formant un tube métallique agencé dans l'alésage 102, pour l'insert 100, et agencé dans l'ouverture traversante 112 pour la bague excentrique 110. Selon cette variante, le matériau élastomère de l'insert 100 et de la bague excentrique 110 s'étend au-delà des limites de l'ouverture traversante 132 de la structure 130, et les tubes métalliques de l'insert et de la bague excentrique s'étendent jusqu'aux limites de l'ouverture traversante, ou un peu moins, de sorte que les éléments de compression 140 et 142 puissent prendre appui sur les surfaces d'appui de la structure 130 qui leur font face quand le matériau déformable est compressé sous l'effet du serrage de l'écrou 161 sur la vis 160. La partie supérieure de la Fig. 4 illustre les éléments de l'ensemble de liaison avant serrage de l'écrou 161 sur la vis 160 et donc avant compression du matériau déformable de la bague excentrique 110 et de l'insert 100. La partie inférieure de la Fig. 4 illustre les éléments de l'ensemble de liaison après serrage de l'écrou 161 sur la vis 160 et donc après compression du matériau déformable de la bague excentrique 110 et de l'insert 100. Il est possible de constater que les interstices présents avant serrage, et utiles à un assemblage rapide et aisé, ont disparu après serrage pour permettre un transfert optimisé des charges radiales entre les deux structures 130 et 150.

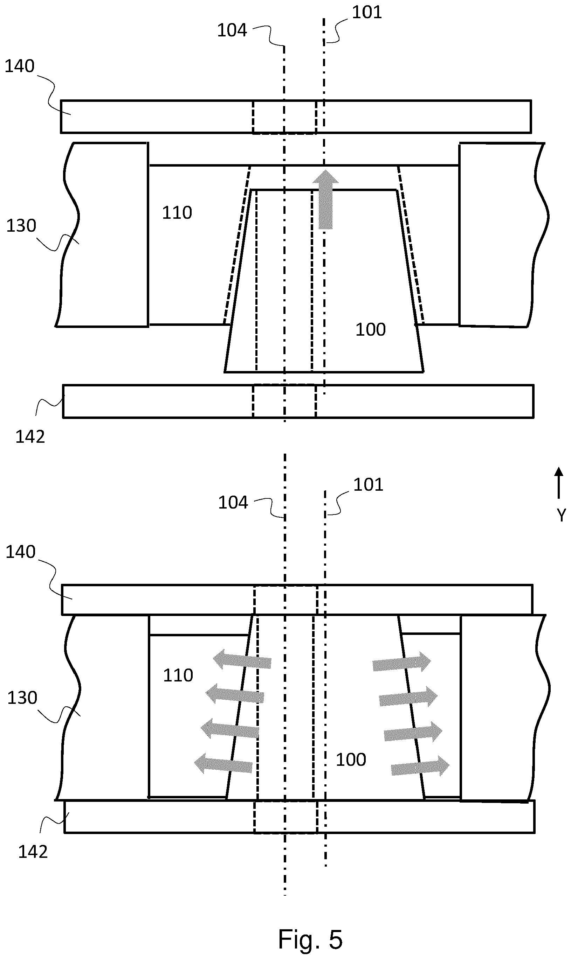

La **Fig. 5** illustre schématiquement un deuxième mode de réalisation selon lequel l'insert 100 est métallique, de forme globalement tronconique, et la bague excentrique 110, de forme globalement cylindrique, présente une ouverture traversante 112 de forme complémentaire à la surface extérieure de révolution de l'insert 100. Les formes complémentaires de l'insert 100 et de l'ouverture traversante de la bague excentrique 110 sont définies de sorte que, lorsque l'élément de compression 142 est rapproché de l'élément de compression 140, l'insert se déplace et se positionne dans l'ouverture traversante 112 de la bague excentrique 110 selon la direction Y et exerce une pression radiale ou sensiblement radiale (avec une composante radiale) sur la surface de l'ouverture traversante 112 de l'insert 100 qui se déforme pour venir combler les interstices existants avant serrage de la liaison boulonnée. Bien évidemment, la hauteur de l'insert 100 ne doit pas excéder, dans cette configuration, la hauteur de l'ouverture traversante 132 de la structure 130, de sorte que l'insert 100 puisse être poussé par l'élément de compression 142, exerçant sur lui une force selon la direction Y, dans l'ouverture traversante de forme tronconique de la bague excentrique 110.

Selon un mode de réalisation, l'élément de compression 140 peut être une partie de la structure 130 (ou de la structure 150) formant une butée pour l'insert 100 et la bague excentrique 110, selon la direction Y, et l'ouverture traversante 132 de la structure 130 s'apparente alors à une cavité (ou à un logement) débouchant avec un plus petit diamètre pour permettre le passage de l'élément de fixation 160, 161, à savoir le boulon utilisé pour opérer la liaison boulonnée.

Selon un mode de réalisation, des crénelures ou dentelures sont agencées sur tout ou partie des surfaces d'appui entre les éléments susceptibles d'être mus en rotation après serrage de la liaison, et en raison de couples en présence, de sorte à limiter un éventuel risque de rotation préjudiciable à la qualité de la liaison boulonnée. Par exemple, des dentelures peuvent être prévues sur les épaulements de la bague excentrique 110 et de l'insert 100 et des dentelures de forme complémentaires peuvent être agencées sur des surfaces d'appui de l'élément de compression 142.

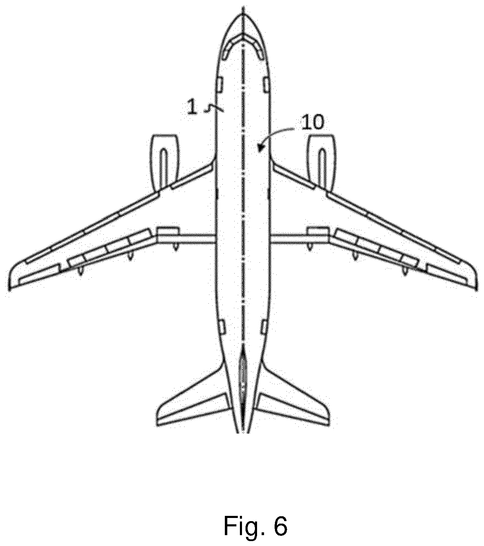

La **Fig. 6** illustre un aéronef 1 comprenant au moins un ensemble de liaison 10 tel que précédemment décrit et utilisé pour opérer une liaison boulonnée entre deux structures de l'aéronef. Plusieurs ensembles de liaison 10 peuvent être utilisés permettant ainsi d'opérer un assemblage rapide et aisé des éléments de structure de l'aéronef 1 tout en garantissant un transfert radial optimisé et efficace des charges entre les structures reliées et en limitant sensiblement les phénomènes de bruit, d'usure, et de frottement.

L'invention ne se limite pas aux seuls modes de réalisation et exemples décrits ci-avant, mais concerne plus généralement tout ensemble de liaison entre deux structures, notamment d'aéronef, comprenant un assemblage de deux bagues excentriques dont l'une, extérieure, est enfilée sur l'autre, intérieure et prenant la forme d'un insert, un alésage de la bague intérieure étant agencé pour une fixation à l'une des structures grâce à un élément de fixation, et la bague extérieure étant logée et maintenue dans une ouverture traversante de l'autre structure, l'une au moins des bagues excentriques étant réalisée dans un matériau déformable quasi incompressible, de sorte à se déformer et à compenser au moins un jeu mécanique lorsqu'elle est comprimée par deux éléments de maintien et de compression, au montage.

## Revendications

1. Ensemble de liaison (10) entre deux structures (130, 150), l'ensemble de liaison (10) comprenant :
- un insert (100) de forme générale cylindrique ou tronconique présentant un alésage (102), agencé pour opérer une liaison avec l'une desdites deux structures (150) grâce à un élément de fixation (160, 161) comportant une tige (160') insérée dans l'alésage (102), l'axe longitudinal (104) de l'alésage (102) étant différent de l'axe longitudinal (101) de l'insert (100) de sorte que l'insert (100) présente une forme générale de bague excentrique,
- une bague excentrique (110), en matériau déformable, de forme générale cylindrique ou tronconique, agencée pour être logée dans une ouverture traversante (132) de l'autre structure (130) parmi les deux structures (130, 150), l'ouverture traversante (132) de la structure (130) présentant une forme complémentaire à la surface de révolution extérieure de ladite bague excentrique (110), ladite bague excentrique (110) comprenant en outre une ouverture traversante (112) de forme complémentaire à la surface de révolution extérieure dudit insert (100) et agencée pour y loger l'insert (100), l'axe longitudinal de l'ouverture traversante (112) de ladite bague excentrique (110) étant confondu ou sensiblement confondu avec l'axe longitudinal (101) dudit insert (100) et ladite bague excentrique (110) étant enfilée sur l'insert (100), de sorte que l'assemblage dudit insert (100) et de ladite bague excentrique (110) constitue un enfilement dit « double excentrique » dans lequel ladite bague excentrique (110) est enfilée sur ledit insert (100), lui-même de la forme d'une bague excentrique, et,
- deux éléments de compression (140, 142) s'étendant radialement par rapport à l'axe longitudinal de l'ouverture traversante (132), présentant chacun un trou de passage configuré pour le passage dudit élément de fixation (160, 161) et étant d'une part solidaire de l'autre structure (130) ou présentant une surface d'appui sur une surface de l'autre structure (130), perpendiculaire à l'axe longitudinal de l'ouverture traversante (132), et présentant d'autre part une surface d'appui sur au moins une surface de l'insert (100), perpendiculaire à l'axe longitudinal de l'ouverture traversante (132), ladite bague excentrique (110) étant dimensionnée pour présenter une forme comprimée quand lesdits deux éléments de compression (140, 142) sont maintenus en position d'appui sur lesdites surfaces d'appui.

2. Ensemble de liaison (10) selon la revendication 1, dans lequel l'insert (100) est fait d'un matériau déformable et dans lequel l'insert (100) et ladite bague excentrique (110) s'étendent de part et d'autre de l'ouverture traversante (132) au-delà d'un plan comprenant lesdites surfaces d'appui.

3. Ensemble de liaison (10) selon la revendication 2, dans lequel l'alésage (102) de l'insert (100) et l'ouverture traversante (112) de ladite bague excentrique (110) comprennent chacun un tube de métal, les deux tubes de métal étant de longueur identique, inférieure à la longueur de l'insert (100) et à la longueur de ladite bague excentrique (110).

4. Ensemble de liaison selon la revendication 1, dans lequel l'insert (100) est en métal et présente une forme générale tronconique, et dans lequel ladite bague excentrique est en matériau déformable et l'ouverture traversante (112) de ladite bague excentrique (110) présente une forme complémentaire à la surface de révolution extérieure de l'insert (100).

5. Ensemble de liaison selon la revendication 1, dans lequel l'un, premier (140), desdits deux éléments (140, 142) de compression est une partie de l'une des deux structures (130), dont ledit trou de passage présente un diamètre inférieur au diamètre de l'ouverture traversante (132) et formant une butée pour ledit insert (100) et ladite bague excentrique (110), et l'autre (142) desdits deux éléments de compression (140, 142) est une rondelle dont le diamètre extérieur est supérieur au diamètre de l'ouverture traversante 132 et dont le diamètre intérieur est inférieur au diamètre de l'insert (100) et supérieur au diamètre de l'alésage (102) de l'insert (100).

6. Ensemble de liaison selon l'une quelconque des revendications précédentes dans lequel le matériau déformable est un élastomère.

7. Partie d'aéronef comprenant une première structure (130), une deuxième structure (150), et un ensemble de liaison (10) selon l'une quelconque des revendications précédentes.

8. Aéronef comprenant un ensemble de liaison selon l'une quelconque des revendications 1 à 6 ou une partie d'aéronef selon la revendication 7.

## Patentansprüche

1. Verbindungsanordnung (10) zwischen zwei Strukturen (130, 150), wobei die Verbindungsanordnung (10) Folgendes aufweist:
- einen Einsatz (100), der eine im Allgemeinen zylindrische oder kegelstumpfförmige Form und eine Bohrung (102) aufweist und so beschaffen ist, dass er eine Verbindung mit einer der beiden Strukturen (150) mittels eines Befestigungselements (160, 161) herstellt, das einen in die Bohrung (102) eingeführten Schaft (160') aufweist, wobei sich die Längsachse (104) der Bohrung (102) darin von der Längsachse (101) des Einsatzes (100) unterscheidet, dass der Einsatz (100) im Allgemeinen die Form eines exzentrischen Rings aufweist,
- einen exzentrischen Ring (110) aus verformbarem Material, der eine im Allgemeinen zylindrische oder kegelstumpfförmige Form aufweist und so beschaffen ist, dass er in einer Durchgangsöffnung (132) der anderen (130) der beiden Strukturen (130, 150) aufgenommen werden kann, wobei die Durchgangsöffnung (132) der Struktur (130) eine Form aufweist, die komplementär zur äußeren Rotationsfläche des exzentrischen Rings (110) ist, wobei der exzentrische Ring (110) darüber hinaus eine Durchgangsöffnung (112) mit einer Form aufweist, die komplementär zur äußeren Rotationsfläche des Einsatzes (100) ist und so beschaffen ist, dass sie den Einsatz (100) darin aufnimmt, wobei die Längsachse der Durchgangsöffnung (112) des exzentrischen Rings (110) mit der Längsachse (101) des Einsatzes (100) zusammenfällt oder im Wesentlichen zusammenfällt und der exzentrische Ring (110) so über den Einsatz (100) geschoben wird, dass das Zusammenfügen des Einsatzes (100) und des exzentrischen Rings (110) eine sogenannte "Doppelexzenter"-Einfädelung bildet, bei der der exzentrische Ring (110) über den Einsatz (100) geschoben wird, der seinerseits die Form eines exzentrischen Rings hat, und,
- zwei Kompressionselemente (140, 142), die sich radial zur Längsachse der Durchgangsöffnung (132) erstrecken und jeweils ein Durchgangsloch aufweisen, das für den Durchgang des Befestigungselements (160, 161) konfiguriert ist, und die einerseits fest mit der anderen Struktur (130) verbunden sind oder eine Auflagefläche auf einer Oberfläche der anderen Struktur (130) senkrecht zur Längsachse der Durchgangsöffnung (132) aufweisen und andererseits eine Auflagefläche auf mindestens einer Oberfläche des Einsatzes (100) senkrecht zur Längsachse der Durchgangsöffnung (132) aufweisen, wobei der exzentrische Ring (110) so dimensioniert ist, dass er eine komprimierte Form aufweist, wenn die beiden Kompressionselemente (140, 142) in Auflageposition auf den Auflageflächen gehalten werden.

2. Verbindungsanordnung (10) nach Anspruch 1, wobei der Einsatz (100) aus einem verformbaren Material hergestellt ist und wobei sich der Einsatz (100) und der exzentrische Ring (110) auf beiden Seiten der Durchgangsöffnung (132) über eine Ebene hinaus erstrecken, die die Auflageflächen beinhaltet.

3. Verbindungsanordnung (10) nach Anspruch 2, wobei die Bohrung (102) des Einsatzes (100) und die Durchgangsöffnung (112) des exzentrischen Rings (110) jeweils ein Metallrohr aufweisen, wobei die beiden Metallrohre die gleiche Länge haben, die kleiner ist als die Länge des Einsatzes (100) und die Länge des exzentrischen Rings (110).

4. Verbindungsanordnung nach Anspruch 1, wobei der Einsatz (100) aus Metall besteht und eine im Allgemeinen kegelstumpfförmige Form aufweist und wobei der exzentrische Ring aus einem verformbaren Material besteht und die Durchgangsöffnung (112) des exzentrischen Rings (110) eine Form aufweist, die komplementär zu der äußeren Rotationsfläche des Einsatzes (100) ist.

5. Verbindungsanordnung nach Anspruch 1, wobei das erste (140) der beiden Kompressionselemente (140, 142) ein Teil einer der beiden Strukturen (130) ist, deren Durchgangsloch einen kleineren Durchmesser als der Durchmesser der Durchgangsöffnung (132) aufweist und einen Anschlag für den Einsatz (100) und den exzentrischen Ring (110) bildet, und das andere (142) der beiden Kompressionselemente (140, 142) eine Scheibe ist, deren Außendurchmesser größer ist als der Durchmesser der Durchgangsöffnung (132) und deren Innendurchmesser kleiner ist als der Durchmesser des Einsatzes (100) und größer ist als der Durchmesser der Bohrung (102) des Einsatzes (100).

6. Verbindungsanordnung nach einem der vorhergehenden Ansprüche, wobei das verformbare Material ein Elastomer ist.

7. Teil eines Luftfahrzeugs mit einer ersten Struktur (130), einer zweiten Struktur (150) und einer Verbindungsanordnung (10) nach einem der vorhergehenden Ansprüche.

8. Luftfahrzeug, das eine Verbindungsanordnung nach einem der Ansprüche 1 bis 6 oder einen Teil eines Luftfahrzeugs nach Anspruch 7 aufweist.

## Claims

1. Connection assembly (10) between two structures (130, 150), the connection assembly (10) comprising :
- a generally cylindrical or frustoconical insert (100) which has a bore (102) and which is arranged in order to bring about a connection with one of the two structures (150) using a fixing element (160, 161) which comprises a rod (160') which is inserted in the bore (102), the longitudinal axis (104) of the bore (102) being different from the longitudinal axis (101) of the insert (100) so that the insert (100) is generally in the form of an eccentric ring,
- a generally cylindrical or frustoconical eccentric ring (110) which is made of deformable material and which is arranged to be accommodated in a through-opening (132) of the other structure (130) of the two structures (130, 150), the through-opening (132) of the structure (130) having a shape which complements the external surface generated by revolution of the eccentric ring (110), the eccentric ring (110) further comprising a through-opening (112) which has a shape which complements the external surface generated by revolution of the insert (100) and which is arranged to accommodate the insert (100) therein, the longitudinal axis of the through-opening (112) of the eccentric ring (110) being aligned or substantially aligned with the longitudinal axis (101) of the insert (100) and the eccentric ring (110) being fitted on the insert (100) so that the assembly of the insert (100) and the eccentric ring (110) constitutes a "double eccentric" fitting in which the eccentric ring (110) is fitted on the insert (100), which is itself in the form of an eccentric ring, and
- two compression elements (140, 142) which extend radially with respect to the longitudinal axis of the through-opening (132) and which each have a through-hole which is configured for the passage of the fixing element (160, 161) and which is, on the one hand, fixedly joined to the other structure (130) or which has an abutment surface with respect to a surface of the other structure (130), which is perpendicular to the longitudinal axis of the through-opening (132) and which has, on the other hand, an abutment surface with respect to at least one surface of the insert (100), perpendicular to the longitudinal axis of the through-opening (132), the eccentric ring (110) being sized to have a compressed shape when the two compression elements (140, 142) are fixed in an abutment position with respect to the abutment surfaces.

2. Connection assembly (10) according to claim 1, wherein the insert (100) is made from a deformable material and wherein the insert (100) and the eccentric ring (110) extend at one side and the other of the through-opening (132) beyond a plane which comprises the abutment surfaces.

3. Connection assembly (10) according to claim 2, wherein the bore (102) of the insert (100) and the through-opening (112) of the eccentric ring (110) each comprise a metal tube, the two metal tubes being of an identical length which is less than the length of the insert (100) and the length of the eccentric ring (110).

4. Connection assembly according to claim 1, wherein the insert (100) is made of metal and has a generally frustoconical shape, and wherein the eccentric ring is made of a deformable material and the through-opening (112) of the eccentric ring (110) has a shape which complements the external surface generated by revolution of the insert (100).

5. Connection assembly according to claim 1, wherein one, the first one (140), of the two compression elements (140, 142) is a portion of one of the two structures (130) whose through-hole has a diameter which is less than the diameter of the through-opening (132) and which forms a stop for the insert (100) and the eccentric ring (110), and the other (142) of the two compression elements (140, 142) is a washer whose external diameter is greater than the diameter of the through-opening (132) and whose internal diameter is less than the diameter of the insert (100) and greater than the diameter of the bore (102) of the insert (100).

6. Connection assembly according to any one of the preceding claims, wherein the deformable material is an elastomer material.

7. Aircraft component comprising a first structure (130), a second structure (150) and a connection assembly (10) according to any one of the preceding claims.

8. Aircraft comprising a connection assembly according to any one of claims 1 to 6 or an aircraft component according to claim 7.
